# EUROPÄISCHE PATENTSCHRIFT

(11) **EP 0 530 253 B1**
(45) Veröffentlichungstag und Bekanntmachung des Hinweises auf die Patenterteilung: **15.02.1995**
(21) Anmeldenummer: 91909656.0
(22) Anmeldetag: 21.05.1991
(51) Int. Cl.: G05B 19/406

(54) **VERFAHREN ZUM BETRIEB EINES LAGEMESSYSTEMS**
METHOD OF OPERATING A POSITION-MEASUREMENT SYSTEM
PROCEDE POUR L'EXPLOITATION D'UN SYSTEME DE MESURE DE POSITION

(30) Priorität: 22.05.1990 DE 4016481
(43) Veröffentlichungstag der Anmeldung: 10.03.1993
(73) Patentinhaber: SIEMENS AKTIENGESELLSCHAFT, 80333 München (DE)
(72) Erfinder: FUEHRER, Diethelm, D-8525 Uttenreuth (DE)
(86) Internationale Anmeldenummer: DE9100412
(87) Internationale Veröffentlichungsnummer: WO9118334

(56) Entgegenhaltungen:
- EP-A- 269 373
- DE-A- 2 649 115
- US-A- 3 845 370

## Beschreibung

Die Erfindung bezieht sich auf ein Verfahren zum Betrieb eines Lagemeßsystems, bei dem in einem vorgegebenen Takt jeweils Lageistwerte erfaßt werden, wobei aus der Größe der jeweiligen Lageänderung zwischen den aufeinanderfolgenden Lageistwerten eine jeweils vorliegende aktuelle Geschwindigkeit bestimmbar ist.

Derartige Verfahren zum Betrieb von Lagemeßsystemen dienen beispielsweise dazu, daß mit Hilfe von absoluten Winkelcodierern an Robotern oder Werkzeugmaschinen jeweils vorliegenden Achspositionen gemessen werden.

Da Meßsysteme dieser Art keine absolute Zuverlässigkeit aufweisen, so daß gemäß Erfahrungswerten alle 10⁸-Messungen eine Fehlmessung zu erwarten ist, führt dies u.U. dazu, daß auch der technische Prozeß, in dem die Roboter bzw. die Werkzeugmaschinen Verwendung finden, gestört wird.

Die Druckschrift US-A-3 845 370 offenbart ein Verfahren, bei dem eine fehlerhafte Messung dadurch erkannt wird, daß ihr Ergebnis "nicht im Rahmen liegt". In diesem Fall kann der fehlerhafte Meßwert durch einen vorhergegangenen Meßwert ersetz werden oder ein Wert geschätzt werden. Die Druckschrift EP-A2-0 269 373 offenbart ein Verfahren, bei dem zur Validierung einer Messung die Ströme oder andere Parameter der die Achsen antreibenden Motoren herangezogen werden. Im Fehlerfall wird ein betreffender Motor abgeschaltet.

Aufgabe der Erfindung ist es, ein Verfahren der eingangs genannten Art so auszubilden, daß Fehlmessungen der Lagemeßsysteme besser vermieden werden. Es soll sozusagen eine fehlertolerante Istwerterfassung verbesserf werden.

Gemäß der Erfindung wird ein Verfahren der eingangs genannten Art so ausgebildet, daß jeder als Hauptmessung dienenden Lageistwertmessung jeweils eine Hilfsmessung zur Erfassung des zu deren Zeitpunkt jeweils vorliegenden Lageistwertes folgt, wobei der zeitliche Abstand zwischen der Hauptmessung und der jeweils folgenden zugeordneten Hilfsmessung relativ klein zur Dauer eines Takts ist, daß aus den aufeinander folgenden Lageistwerten der Hauptmessungen sowie auf den aufeinanderfolgenden Lageistwerten der Hilfsmessungen die jeweils aktuelle Ist-Geschwindigkeit ermittelt wird und daß dann, wenn die Geschwindigkeitsdifferenz zwischen der Hauptmessung und der folgenden Hilfsmessung und/oder die Geschwindigkeitsdifferenz zwischen der Hauptmessung und der vorangegangenen Hauptmessung einen jeweils vorgegebenen Grenzwert überschreitet, die aktuelle Hilfsmessung als Hauptmessung für die Berechnung von Lage-, Geschwindigkeits- und/oder Beschleunigungswerten als relevant angenommen wird. Eine vorteilhafte Ausbildung der Erfindung ist dadurch gekennzeichnet, daß jede Übernahme einer Hilfsmessung als Hauptmessung registriert wird. Damit ist es möglich, eine allmähliche Verschlechterung der Qualität des Weggebersystems frühzeitig zu erkennen, so daß gegebenenfalls Servicemaßnahmen getroffen werden können.

Ein Ausführungsbeispiel der Erfindung ist in der Zeichnung dargestellt und wird im folgenden näher erläutert. Dabei zeigen:
FIG 1 ein Zeit-Geschwindigkeits-Diagramm und
FIG 2 ein Blockschaltbild.

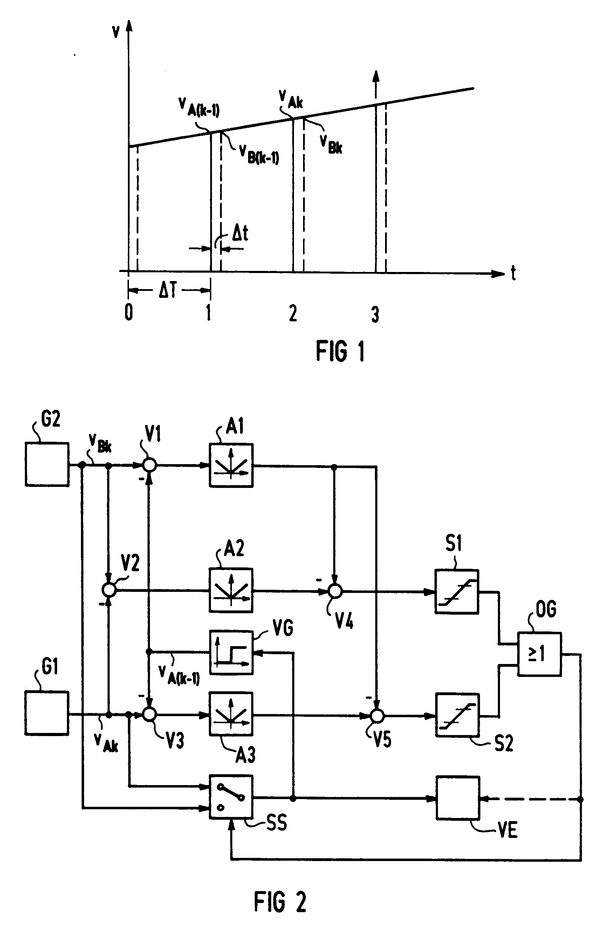

In der Darstellung gemäß FIG 1 ist ein angenommener Geschwindigkeitsverlauf dargestellt, der von einem Lagemeßsystem zu erfassen ist. Die Zeitachse ist dabei mit t bezeichnet, die Geschwindigkeitsachse mit v. In einem vorgegebenen Takt delta T werden dabei zu Tastzeitpunkten 0, 1, 2, 3 usw. die jeweiligen Geschwindigkeiten v ermittelt, was beispielsweise so geschehen kann, daß die jeweils zu den Abtastzeitpunkten vorliegenden Lagesignale voneinander subtrahiert werden und auf die Abtastzeit delta T bezogen werden. So ergibt sich beispielsweise zur Zeit t = 1 die Geschwindigkeit v_{A(k-1)} und zur Zeit t = 2 ergibt sich die Geschwindigkeit v_{Ak}.

Es könnte nun sein, daß zu einem der Abtastzeitpunkte eine Fehlmessung erfolgt. So könnte, wie durch einen Pfeil angedeutet, zur Zeit t = 3 ein Ausreißer des Geschwindigkeitswertes vorliegen. Ein derartiger verfälschter Geschwindigkeitswert soll nun gemäß der Erfindung eliminiert werden.

Dazu hat der Erfinder erkannt, daß derartige Ausreißer meist nur ganz sporadisch auftreten, so daß der folgende Ansatz zu einer Fehlerkorrektur möglich ist.

Mit einem zeitlichen Versatz delta t werden zu den obengeschilderten Abtastzeitpunkten, an denen die Lagemessungen sozusagen als Hauptmessungen erfolgen, Hilfsmessungen vorgenommen, die in der Darstellung durch gestrichelte Linien dargestellt sind. Die zeitliche Verzögerung delta t ist dabei relativ klein gegenüber der Taktzeit delta T. Es ist jedoch die Verzögerungszeit delta t so gewählt, daß sie größer ist als die übliche Dauer von sporadischen Störungen des Wegmeßsystems.

Der Hauptmessung zur Zeit t = 1, die auf eine Geschwindigkeit v_{A(k-1)} führt, würde dann beispielsweise - wie durch eine gestrichelte Linie angedeutet - eine Hilfsmessung folgen, die zu einer Geschwindigkeit v_{B(k-1)} hinführt. Entsprechendes wird zum Zeitpunkt t = 2 für Geschwindigkeitswerte v_{Ak} und v_{Bk} gelten.

Die Grundidee gemäß der Erfindung liegt nun darin, daß jeweils bei einer Hauptmessung untersucht wird, ob die Geschwindigkeitsdifferenz dieser Hauptmessung zur vorangegangenen Hauptmessung bzw. zur folgenden Nebenmessung so groß ist, wie sie sich aus den zu erwartenden Beschleunigungen des Systems ergibt. Sogenannte Ausreißer bei den Hauptmessungen werden dann durch die unmittelbar folgende Hilfsmessung ersetzt.

Ein Ausführungsbeispiel in Form eines Blockschaltbildes zeigt die Darstellung gemäß FIG 2.

Mit Hilfe von Gebereinrichtungen G1 und G2 möge dabei unter Zugrundelegung von Lagesignalen das jeweilige Geschwindigkeitssignal v_{Ak} bzw. v_{Bk} generiert werden. Der jeweils vorangegangene, als Hauptmessung akzeptierte Geschwindigkeitsvert v_{A(k-1)}, steht jeweils am Ausgang eines Verzögerungsgliedes VG an.

Nunmehr wird durch einen Vergleicher V1 die Größe der Geschwindigkeiten v_{Bk} und v_{A(k-1)} verglichen und in einem Absolutwertbildner A1 wird der Absolutwert dieser Differenz ermittelt. In einem Vergleicher V2 werden die Geschwindigkeiten v_{Bk} und v_{Ak} miteinander verglichen und mit Hilfe eines Absolutwertbildners A2 wird der Absolutwert der Differenz gebildet. Entsprechend wird in einem Vergleichsglied V3 die Differenz zwischen den Geschwindigkeiten v_{Ak} und v_{A(k-1)} gebildet. Dieses Ergebnis wird einem Absolutwertbildner A3 zugeleitet, an dessen Ausgang der Absolutwert der ermittelten Differenzgeschwindigkeit ansteht. In Vergleichsgliedern V4 und V5 werden die Ausgangssignale der Absolutwertbildner A1 und A2 bzw. A3 und A1 miteinander verglichen. Die Ausgangssignale der Vergleichsglieder V4 und V5 gelangen an eine Schwellwertstufe S1 bzw. S2, die stets dann, wenn die resultierende Geschwindigkeitsdifferenz, d.h. die eingangs genannten im Betrieb zu erwartende Geschwindigkeitsdifferenzen zwischen aktueller Hauptmessung und vorangegangener Hauptmessung bzw. Hilfsmessung, einen vorgegebenen Schwellwertbereich verlassen, ein entsprechendes Steuersignal an ein ODER-Glied OG leiten, was dazu führt, daß eine Schaltstufe SS anstelle des üblicherweise durchgeschalteten Geschwindigkeitswertes v_{Ak} den Geschwindigkeitswert v_{Bk} an den Eingang des Verzögerungsgliedes VG fortschaltet. Das Ansprechen des ODER-Gliedes kann zusätzlich noch - wie gestrichelt dargestellt - einer Verarbeitungseinrichtung VE gemeldet werden.

Über die Schaltstufe SS wird somit auch das jeweils als augenblicklich gültige Hauptmessung anzusehende Geschwindigkeitssignal der Verarbeitungseinrichtung VE zugeleitet. Daraus kann in der Verarbeitungseinrichtung VE in bekannter Weise ein Lage-, Geschwindigkeits- bzw. Beschleunigungssignal für das System generiert werden.

## Patentansprüche

1. Verfahren zum Betrieb eines Lagemeßsystems, bei dem in einem vorgegebenen Takt jeweils Lageistwerte erfaßt werden, wobei aus der Größe der jeweiligen Lageänderung zwischen den aufeinanderfolgenden Lageistwerten eine jeweils vorliegende aktuelle Geschwindigkeit bestimmbar ist, **dadurch gekennzeichnet**, daß jeder als Hauptmessung dienenden Lageistwertmessung jeweils eine Hilfsmessung zur Erfassung des zu deren Zeitpunkt jeweils vorliegenden Lageistwertes folgt, wobei der zeitliche Abstand (delta t) zwischen der Hauptmessung und der jeweils folgenden zugeordneten Hilfsmessung relativ klein zur Dauer eines Taktes (delta T) ist, daß aus den aufeinanderfolgenden Lageistwerten der Hauptmessungen sowie aus den aufeinanderfolgenden Lageistwerten der Hilfsmessungen die jeweils aktuelle Ist-Geschwindigkeit (v_{Ak}, v_{Bk}) ermittelt wird und daß dann, wenn die Geschwindigkeitsdifferenz zwischen der Hauptmessung und der folgenden Hilfsmessung und/oder die Geschwindigkeitsdifferenz zwischen der Hauptmessung und der vorangegangenen Hauptmessung einen jeweils vorgegebenen Grenzwert überschreitet, die aktuelle Hilfsmessung als Hauptmessung für die Berechnung von Lage-, Geschwindigkeits- und/oder Beschleunigungswerten als relevant angenommen wird.

2. Verfahren nach Anspruch 1, **dadurch gekennzeichnet**, daß jeder Übernahme einer Hilfsmessung als Hauptmessung registriert wird.

## Claims

1. Method for the operation of a position measuring system, where in a specified cycle in each case actual position values are detected, whereby a respectively existing current speed can be determined from the magnitude of the respective position change between the successive actual position values, characterized in that a respective auxiliary measurement follows each actual-position-value measurement, serving as main measurement, for the detection of the actual position value respectively existing at the instant of the auxiliary measurement, with the temporal interval (delta t) between the main measurement and the respectively following associated auxiliary measurement being relatively small with respect to the duration of a cycle (delta T), in that the respectively current actual speed (v_{Ak}, v_{Bk}) is determined from the successive actual position values of the main measurements and from the successive actual position values of the auxiliary measurements and in that if the speed difference between the main measurement and the following auxiliary measurement and/or the speed difference between the main measurement and the preceding main measurement exceeds a respectively specified limiting value, the current auxiliary measurement is assumed relevant as the main measurement for the calculation of position values, speed values and/or acceleration values.

2. Method according to claim 1, characterized in that each acceptance of an auxiliary measurement is registered as main measurement.

## Revendications

1. Procédé d'exploitation d'un système de mesure de position, dans lequel on acquiert des valeurs réelles de position à une cadence prescrite, une vitesse actuelle présente pouvant être déterminée à partir de la grandeur du changement de position entre les valeurs réelles de position successives, caractérisé par le fait que l'on fait suivre chaque mesure d'une valeur réelle de position servant de mesure principale chaque fois d'une mesure auxiliaire destinée à l'acquisition de la valeur réelle de position présente à cet instant, l'intervalle de temps (delta t) entre la mesure principale et la mesure auxiliaire associée qui la suit chaque fois étant relativement petit par rapport à la durée d'une cadence (delta T), on détermine la vitesse réelle (v_{Ak}, v_{Bk}) actuelle à partir des valeurs réelles de position successives des mesures principales ainsi qu'à partir des valeurs réelles de position successives des mesures auxiliaires, et qu'ensuite, lorsque la différence de vitesse entre la mesure principale et la mesure auxiliaire qui la suit et/ou la différence de vitesse entre la mesure principale et la mesure principale précédente dépassent une valeur limite prescrite, on considère la mesure auxiliaire actuelle comme valable comme mesure principale pour le calcul des valeurs de position, de vitesse, et/ou d'accélération.

2. Procédé selon la revendication 1, caractérisé par le fait que l'on enregistre chaque réception d'une mesure auxiliaire comme mesure principale.
